Europäisches Patentamt

European Patent Office

Office européen des brevets

(19)

(11) Veröffentlichungsnummer: **0 160 976**
**A2**

(12) # EUROPÄISCHE PATENTANMELDUNG

(21) Anmeldenummer: **85105605.1**

(22) Anmeldetag: **07.05.85**

(51) Int. Cl.⁴: **B 65 D 77/20**

(30) Priorität: **07.05.84 DE 3416756**

(43) Veröffentlichungstag der Anmeldung:
**13.11.85 Patentblatt 85/46**

(84) Benannte Vertragsstaaten:
**CH DE FR GB IT LI**

(71) Anmelder: **Nyffeler, Corti AG**

**CH-3422 Kirchberg BE(CH)**

(72) Erfinder: **Lamping, Alfons, Dr.**
**route de Combarod 5**
**CH-1711 Corminboeuf(CH)**

(72) Erfinder: **Karth, Beat**
**Erlenweg 16**
**CH-3363 Oberönz(CH)**

(74) Vertreter: **Barz, Peter, Dr. et al,**
**Patentanwälte Dr. V. Schmied-Kowarzik Dipl.-Ing. G.**
**Dannenberg Dr. P. Weinhold Dr. D. Gudel Dipl.-Ing. S.**
**Schubert Dr. P. Barz Siegfriedstrasse 8**
**D-8000 München 40(DE)**

(54) **Mit einem transparenten deckel verschlossener glasbehälter.**

(57) Ein insgesamt durchsichtiger, verschlossener Glasbehälter wird dadurch erhalten, daß man eine innenseitig mit einer transparenten Siegelschicht beschichtete, reißfeste, transparente Kunststoffolie auf den Glasbehälterrand aufsiegelt, der mit einer auf die Siegelschicht des Deckels abgestimmten Deckschicht versehen ist.

EP 0 160 976 A2

## Mit einem transparenten Deckel verschlossener Glasbehälter

Die Erfindung betrifft einen mit einem transparenten Deckel verschlossenen Glasbehälter und ein Verfahren zu seiner Herstellung.

Die Heißversiegelung von Glasbehältern gewinnt zunehmendes Interesse, da sie die fortschrittliche Verpackungstechnologie des Heißsiegelns mit den Vorteilen des Verpackungsmaterials Glas (Transparenz etc.) verbindet. Allerdings wurden bisher üblicherweise heißsiegelfähig lackierte Aluminiumdeckel zum Verschließen von Glasbehältern eingesetzt und es standen keine transparenten Kombinationen von Deckel und Siegelmedium zur Verfügung, die eine insgesamt durchsichtige Verpackung ermöglichen.

Aufgabe der Erfindung ist es daher, ein Versiegelungssystem für Glasbehälter bereitzustellen, das eine insgesamt transparente Verpackung des Füllgutes ermöglicht.

Gegenstand der Erfindung ist ein mit einem transparenten Deckel verschlossener Glasbehälter, der dadurch gekennzeichnet ist, daß der Deckel aus einer reißfesten transparenten Kunststoffkomponente besteht, die innenseitig mit einer transparenten Siegelschicht beschichtet ist, und daß der Deckel auf die mit einer auf die Siegelschicht abgestimmte Deckschicht des Glasbehälterrandes aufgesiegelt ist.

Die Versiegelung kann hierbei sowohl durch Heißsiegeln als auch durch Kaltsiegeln erfolgen.

Bevorzugte reißfeste transparente Kunststoffolien sind Folien aus Polyester, z.B. Polyethylenterephthalat, biaxial orientiertem Propylen, Polyamid, Polycarbonat oder Zellglas sowie Verbundfolien aus Kombinationen dieser Materialien. Im Falle der Heißsiegelung werden Folien und Verbundfolien mit ausreichend hoher Wärmestabilität (z.B.

100 bis 200°C) bevorzugt.

Zur Herstellung des Deckels wird die reißfeste transparente Kunststoffolie mit einer geeigneten transparenten Heiß- oder Kaltsiegelschicht versehen. Diese Siegelschichten können z.B. als Lack aufgetragen, als Folie kaschiert oder auch extrusionsbeschichtet sein.

Um eine feste Verbindung zwischen Deckel und Glasbehälterrand zu erzielen, muß auf letzteren eine auf die Siegelschicht des Deckels abgestimmte Deckschicht aufgetragen werden. Spezielle Beispiele für geeignete Siegelschicht/Deckschicht-Kombinationen sind für den Fall des Heißsiegelns Polyacrylat/Polyacrylat, Polyacrylat/Polyvinylacetat, Polyvinylbutyral/Polyvinylbutyral, Ionomer (z.B. Surlyn)/Polyethylen, Polyethylen/Ethylen-Vinylacetat-Copolymer, Polyethylen/Ethylen-Acrylsäure-Copolymer, Ethylen-Vinylacetat-Copolymer/Ethylen-Vinylacetat-Copolymer.

Im Falle der Kaltsiegelung sind Siegelschicht und Deckschicht im allgemeinen identisch. Eine geeignete Kombination ist z.B. Naturlatex/Naturlatex, die den zusätzlichen Vorteil einer Wiederverschließbarkeit des geöffneten Behälters hat.

Die Versiegelung des Glasbehälters erfolgt auf herkömmliche Weise. Gegebenenfalls kann der Glasbehälterrand vor Auftrag der Deckschicht mit einem Haftvermittler, z.B. einem Silan oder Titansäureester, vorbehandelt werden. Je nach Glasrandbehandlung ist das Öffnungsverhalten des Behälters von "fest" bis "leicht zu öffnen" einstellbar.

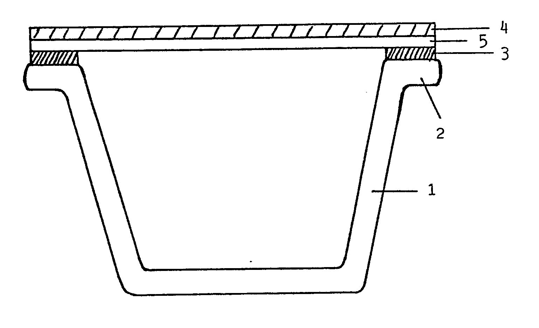

In der Zeichnung ist schematisch eine Ausführungsform eines erfindungsgemäßen Glasbehälters 1 dargestellt, der auf dem Rand 2 eine Deckschicht 3 aufweist, auf die eine transparente Kunststoffolie 4 mit einer Siegelschicht 5 aufgesiegelt ist.

- 4 -

Patentansprüche

1. Mit einem transparenten Deckel verschlossener Glasbehälter, dadurch gekennzeichnet, daß der Deckel aus einer reißfesten transparenten Kunststoffolie, die innenseitig mit einer transparenten Siegelschicht beschichtet ist, besteht und auf die mit einer auf die Siegelschicht abgestimmten Deckschicht des Glasbehälterrandes aufgesiegelt ist.

2. Glasbehälter nach Anspruch 1, dadurch gekennzeichnet, daß die Kunststoffolie aus Polyester, biaxial orientiertem Polypropylen, Polyamid, Polycarbonat, Zellglas oder Kombinationen dieser Materialien besteht.

3. Glasbehälter nach Anspruch 1 oder 2 dadurch gekennzeichnet, daß die Siegelschicht eine Heiß- oder Kaltsiegelschicht ist.

4. Glasbehälter nach einem der Ansprüche 1 bis 3, gekennzeichnet durch folgende Siegelschicht/Deckschicht-Kombinationen: Polyacrylat/Polyacrylat, Polyacrylat/Polyvinylacetat, Polyvinylbutyral/Polyvinylbutyral, Ionomere/Polyethylen, Polyethylen/Ethylen-Vinylacetat-Copolymer, Polyethylen/Ethylen-Acrylsäure-Copolymer, Ethylen-Vinylacetat-Copolymer/Ethylen-Vinylacetat-Copolymer, Naturlatex/Naturlatex.

5. Glasbehälter nach einem der Ansprüche 1 bis 4, dadurch gekennzeichnet, daß der Glasbehälterrand vor dem Aufbringen der Deckschicht mit einem Haftvermittler vorbehandelt worden ist.

6. Verfahren zur Herstellung eines mit einem transparenten Deckel verschlossenen Glasbehälters, dadurch gekennzeichnet, daß man auf den zu verschließenden Glasrand eine Deckschicht aufbringt, die auf die Siegelschicht des Deckels abgestimmt ist, und auf den so vorbehandelten Glasrand einen Deckel aufsiegelt, der aus einer reißfesten transparenten Kunststoffolie besteht, die innenseitig mit einer transparenten Siegelschicht beschichtet ist.

7. Verfahren nach Anspruch 6, dadurch gekennzeichnet, daß man als Kunststoffolie eine Folie aus Polyester, biaxial orientiertem Polypropylen, Polyamid, Polycarbonat oder Zellglas oder eine Verbundfolie aus Kombinationen dieser Materialien verwendet.

8. Verfahren nach Anspruch 6 oder 7, dadurch gekennzeichnet, daß man eine Heiß- oder Kaltsiegelschicht verwendet.

9. Verfahren nach einem der Ansprüche 6 bis 8, dadurch gekennzeichnet, daß man folgende Siegelschicht/Deckschicht-Kombination verwendet: Polyacrylat/Polyacrylat, Polyacrylat/Polyvinylacetat, Polyvinylbutyral/Polyvinylbutyral, Ionomere/Polyethylen, Polyethylen/Ethylen-Vinylacetat-Copolymer, Polyethylen/Ethylen-Acrylsäure-Copolymer, Ethylen-Vinylacetat-Copolymer/Ethylen-Vinylacetat-Copolymer, Naturlatex/Naturlatex.

10. Verfahren nach einem der Ansprüche 6 bis 9, dadurch gekennzeichnet, daß man den Glasbehälterrand vor dem Aufbringen der Deckschicht mit einem Haftvermittler behandelt.

1/1